# EUROPEAN PATENT APPLICATION

(11) **EP 3 179 707 A2**
(43) Date of publication of application: **14.06.2017**
(21) Application number: 16203239.5
(22) Date of filing: 09.12.2016
(51) Int. Cl.: H04M 7/00, H04L 29/06, H04M 7/12

(54) **METHODS AND SYSTEMS FOR PHONE SERVICE WITH PERSONAL SWITCH BOX**

(30) Priority: 09.12.2015 US 201562265366 P; 09.06.2016 US 201662495578 P; 28.06.2016 US 201662355650 P; 02.11.2016 US 201615341708
(71) Applicant: Japan Communications Inc., Tokyo 105-0001 (JP)
(72) Inventor: FUKUDA, Naohisa, Minato-ku, Tokyo 105-0001 (JP); SANDA, Frank Seiji, Minato-ku, Tokyo 105-0001 (JP); KUDO, Yasushi, Minato-ku, Tokyo 105-0001 (JP); DEICKMAN, Greg, Minato-ku, Tokyo 105-0001 (JP); TAKAHASHI, Kotaro, Minato-ku, Tokyo 105-0001 (JP); YOKOYAMA, Hiroaki, Minato-ku, Tokyo 105-0001 (JP); KAWATAKA, Takaaki, Minato-ku, Tokyo 105-0001 (JP); TAJIMA, Daisuke, Minato-ku, Tokyo 105-0001 (JP); SATO, Takahiro, Minato-ku, Tokyo 105-0001 (JP); SHIRATO, Kazuhiro, Minato-ku, Tokyo 105-0001 (JP)
(74) Representative: D Young & Co LLP

(57) **Abstract**

Methods and systems provide a telephone service with a personal switch box. One aspect of an embodiment of the invention extends use of a telephone number on a Public Switched Telephone Network to mobile terminals by a personal switch box relaying telephone call signals between the Public Telephone Network and an IP-PBX, where the IP-PBX routes the calls between the personal switch box and a cellular phone that is associated with the personal switch box, through a gateway of a mobile virtual network operator the telephone number over mobile wireless network. The gateway may control network bandwidth allocation for the data traffic with the mobile terminals during voice stream data transmission for providing required quality of service.

## Description

### CROSS-REFERENCE TO RELATED APPLICATIONS

This application claims the benefit of U.S. Provisional Patent Application Serial No. 62/265,366 entitled "Methods and Systems for Phone Service with Personal Switch Box," filed December 9, 2015; U.S. Provisional Patent Application Serial No. 62/355,650 entitled "Methods and Systems for Phone Service with Personal Switch Box," filed June 28, 2016; U.S. Provisional Patent Application Serial No. 62/495,578 entitled "Methods and Systems for Phone Service with Personal Switch Box," filed June 9, 2016; and U.S. Non-Provisional Patent Application Serial No. 15/341,708 entitled "Methods and Systems for Phone Service with Personal Switch Box," filed November 2, 2016, the disclosures of each of which are hereby incorporated by reference in their entirety.

### BACKGROUND OF THE INVENTION

Telephone numbers are widely used by telephone service providers as a way to manage their subscribing customers. A caller of a phone call may specify a phone number of a party that receives the phone call. Telephone numbers typically consist of a set of digits that specify a country, followed by a different set of digits that may specify regions within a country, as well as sections within the region. There are also cases within a country or a region where a particular range of phone numbers is reserved for assignment to fixed landline phones. Additionally, there are cases within a country or region where a particular range is reserved for assignment to cellular phones. For example, under the Japanese telecommunications regulations, phone numbers with prefixes 070/080/090 are reserved to be assigned to telephone service customers who use cellular phones. In examples, these prefixes do not indicate a notion of a region in Japan where the cellular phones are registered or located for use. In other examples, there are prefix ranges of phone numbers, which are reserved for assignment to telephone service customers who use land line phone lines in specific regions in Japan. For example, phone numbers that start with area code prefix 03 indicates that the phone numbers are used by fixed land line phones located in the Tokyo metropolitan area. In examples, prefix 06 indicates that the corresponding phones are located in Osaka, Japan. These phone numbers that are reserved for region-specific assignments is called 0AB-J phone numbers. Since phone numbers with region-specific prefixes, such as 0AB-J numbers, are assigned and used by fixed land line phones only in the designated region and not to cell phones, use of these phone numbers have been cumbersome to people who would like to use the phone numbers to receive and make calls while they are not at home.

Call forwarding has been known to forward incoming phone calls to a predesignated phone number. By using call forwarding, a receiving party can receive phone calls to home while they are not at home. However, call forwarding typically has two issues: 1) call forwarding is for receiving incoming phone calls, and would not allow users to make phone calls using the forwarded phone number unless they make calls at home; and 2) call forwarding typically does not forward a caller's phone number to the forwarded destination as Caller ID. In particular, in this second example, the home phone number of the forwarding party becomes the Caller ID, and the final recipient to whom the call is forwarded cannot distinguish between incoming calls that have been forwarded from another phone number and incoming calls that specify the final phone number directly.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### SUMMARY OF THE INVENTION

Methods and systems for phone service with personal switch box are provided. According to an aspect of the invention, a computer-implemented system is provided for telephone service with a personal switch box. The system may comprise a first telephone network with access to a Public Switched Telephone Network. The system may also comprise a telephone number that enables placing and receiving calls on the first telephone network. Additionally, the system may comprise a wide-area data network comprising at least one cellular wireless network controlled by a mobile network operator. The system may also comprise at least one mobile terminal for telephone calls over the wide-area data network. Additionally, the system may comprise a second telephone network over the wide-area data network. Further, the system may comprise an IP-PBX for controlling telephone signals on the second telephone network. The system may also comprise a gateway between the IP-PBX and the wide-area network for connecting and controlling data traffic over the said wide-area data network. Additionally the system may comprise a personal switch box between the IP-PBX and the first telephone network, comprising a trunk relay for relaying telephone signals between the first telephone network and the second telephone network.

The IP-PBX may maintain association between the personal switch box and the mobile terminals for enabling the mobile terminals for initiating and receiving telephone calls across the first telephone network using the telephone number. Additionally, the telephone number denotes a region that includes with the location where the personal switch box is physically located.

In some examples, the system may further comprise a mobile virtual network operator for interconnecting with the mobile network operator using the gateway. The mobile virtual network operator may change a network bandwidth resource allocation for data communications by the mobile terminals when a voice data stream is transmitted to maintain a quality of service for the voice data stream transmission over the MVNO network. The IP-PBX may request the gateway and the gateway increases network bandwidth allocation for communication between the terminal handset and the IP network when a telephone call conversation starts thereby maintaining a quality of voice service during the call.

Another aspect of the invention may provide a computer-implemented method for providing a telephone service with a person switch box. The method comprises registering a personal switch box via an IP network. Additionally, the method comprises receiving a first telephone number for use on a Public Switched Telephone Network from the personal switch box via the IP network. The method also comprises dialing the first telephone number to place an outbound telephone call using a second telephone number as a caller number via the Public Switched Telephone Network. Additionally, the method comprises receiving an incoming telephone call from the personal switch box with the first telephone number as a receiving party and the second telephone number as a caller. Further, the method comprises hanging up the outbound telephone call. The method also comprises validating that the personal switch box is associated with the first telephone number.

A further aspect of the invention may provide a computer-implemented method for providing a telephone service with a personal switch box. The method comprises registering a personal switch box via an IP network. The method also comprises receiving a first telephone number for use on a Public Switched Telephone Network from the personal switch box via the IP network. Additionally, the method comprises receiving an incoming telephone call from the personal switch box via the Public Switched Telephone Network. Further, the method comprises picking up the incoming telephone call if the caller telephone number is the first telephone number. Additionally, the method comprises receiving an identifier data from the caller over the phone call. The method also comprises validating that the personal switch box is associated with the first telephone number if the identifier data is associated with the personal switch box.

### BRIEF DESCRIPTION OF THE DRAWINGS

The novel features of the invention are set forth with particularity in the appended claims. A better understanding of the features and advantages of the invention will be obtained by reference to the following detailed description that sets forth illustrative embodiments, in which the principles of the invention are utilized, and the accompanying drawings of which:
FIG. 1 illustrates an example system with a Home Switch Box and an MVNO, in accordance with embodiments of the invention;
FIG. 2 illustrates an example Home Switch Box, in accordance with embodiments of the invention;
FIG. 3 illustrates an example table that associates phone numbers among devices in the system, in accordance with embodiments of the invention;
FIG. 4 illustrates an example system with phone numbers and ID associations, in accordance with embodiments of the invention;
FIG. 5 illustrates an example sequence of processing an outbound call, in accordance with embodiments of the invention;
FIG. 6 illustrates an example sequence of processing an incoming call, in accordance with embodiments of the invention;
FIG. 7 illustrates an example sequence of initializing the Home Switch Box, in accordance with embodiments of the invention;
FIG. 8 illustrates a first example sequence of validating installation, in accordance with embodiments of the invention;
FIG. 9 illustrates a second example sequence of validating installation, in accordance with embodiments of the invention;
FIG. 10 illustrates an example of a network or host computer platform, as may be used to implement a server or electronic devices, in accordance with embodiments of the invention;
FIG. 11 illustrates a computer with user interface elements, as may be used to implement a personal computer, electronic device, or other type of work station or terminal device, in accordance with embodiments of the invention;
FIG. 12 illustrates an example of an internal module architecture of the Home Switch Box, in accordance with embodiments of the invention;
FIG. 13 illustrates another example system with a Home Switch Box and MVNO, in accordance with embodiments of the invention; and
FIG. 14 illustrates an example system with Home Switch Box having a splitter, in accordance with embodiments of the invention.

### DETAILED DESCRIPTION OF THE INVENTION

The invention enables users of a phone number to extend its use to more than one terminal including handsets that communicate over cellular networks for handing incoming and outbound calls in a cost-effective manner.

Cordless phone system have been known such that a telephone service customer with a fixed landline phone may use a cordless phone system to take incoming and outgoing phone calls at home through the use of wireless terminals. A cordless phone system may consist of a base station that connects with the fixed land line, and cordless handsets that connects with the base station via wireless communication. These cordless handsets may be associated with a specific base station, typically using specific ranges of frequency bands with data transmission protocols such as Digital Enhanced Cordless Telecommunications (DECT), IEEE 802.11a/b/g standard wireless LAN technology, or with unlicensed spectrum. These special cordless handsets are shorter in radio transmission ranges, and not compatible with typical smartphones or mobile handhelds that use cellular wireless communications. Additionally, there are special wireless handsets with dual-capability of cordless and cellular phone. These handsets, however, are not widely accepted because they are generally high-priced and/or these handsets are more cumbersome to sign up and carry.

In examples of systems that do not have benefits of the invention as described herein, equipment with cellular wireless connectivity and RJ11 phone jack port, such as AT&T® Wireless Home Phone, may be used for setting up a wireless phone service at home by connecting a fixed-line home telephone to the equipment instead of connecting the fix-line home telephone to an RJ11 phone jack on the wall inside the house. The equipment may effectively converts a fixed-line analog telephone line at home to a wireless phone without replacing the home phone. In these examples, the equipment may simply switch the phone system connection from a fixed-line service provided by a fixed-line telephone operator to a cellular wireless service provided by a cellular wireless telephone operator. The equipment in these examples, however, do not enable users to take and make calls using the same home phone number from smart phones. When using this equipment, users still need to set up call forwarding on incoming calls through the public switched telephone network. Use of this equipment means switching a telephone company from the existing provider on fixed-line to another provider on cellular wireless network, and changing in billing and contracting was inconvenient to customers. As such, systems of the invention as described herein provide benefits that have not been previously known.

As additional examples of systems that lack benefits of the invention described herein, analog telephone adapters (ATA), including Obi110 Voice Service Bridge and Telephone Adapter, have been known to create an IP telephone connection for individual analog telephones at home or in offices. The adapters connect calls from the analog telephones with the IP-PBX or a Voice-over-IP servers via the Internet instead of through the traditional landline telephone systems, in order to save costs. Such adapters may feature an RJ11 FXS (Phone) analog port to connect an analog home telephone, a port to connect to the Public Switched Telephone Network line FXO (Line) port, as well as a data communication port to connect to a Voice-over-IP (VoIP) server via the Internet. Such adapters may convert signals between analog telephone and VoIP data communication. By installing the adapter and connecting it with an analog telephone unit via the FXS port, the adapter enables to use the analog telephone as an IP phone. The IP phone connects to the Public Switched Telephone Network at the VoIP server through the Internet connection. The FXO port is used as an exception to the normal use, to allow the analog telephone unit at the FXS port to dial local emergency calls such as at 911. Under this exceptional use, the adapter directly and locally connects data traffic between the FXS port and the FXO port locally within the adapter, without requiring a round-trip communication between the adapter and the IP-PBX over the Internet. The primary purpose of using the adapters is to minimize and to discourage use of the landline telephone line, and use IP-based phone service over the Internet to save costs of calling. IP-based telephone services are known to be less expensive than landline telephone services.

Recently, mobile wireless telecommunication services by Mobile Virtual Network Operators (MVNOs) have been proliferating. MVNOs offer voice and/or data services over cellular and other radio networks not by owning facilities such as base stations for radio transmission, but by inter-connecting with the core networks operated by Mobile Network Operators (MNOs). MVNOs therefore may leverage existing cellular and other radio network infrastructure.

Additionally, there have been needs to use a conventional smartphone as a cordless phone over the cellular network by choice made by users of fixed landline phone numbers, without causing burden of requiring telephone service providers that assign the fixed landline phone numbers to make changes in it settings.

Cost of using telephone voice services over the cellular mobile wireless network is more expensive than the costs of using traditional landline telephone voice services. The invention herein enables to drastically reduce costs of using telephone voice over the cellular mobile network by uniquely integrating the data service over the cellular mobile wireless network, the landline telephone lines to connect to the Public Switched Telephone Network, and the network traffic and mobile device management, all seamlessly controlled in the MVNO system. The invention herein encourages use of the landline telephone network by routing call data traffic from smartphones under the cellular mobile wireless network to their corresponding individual landline telephone lines.

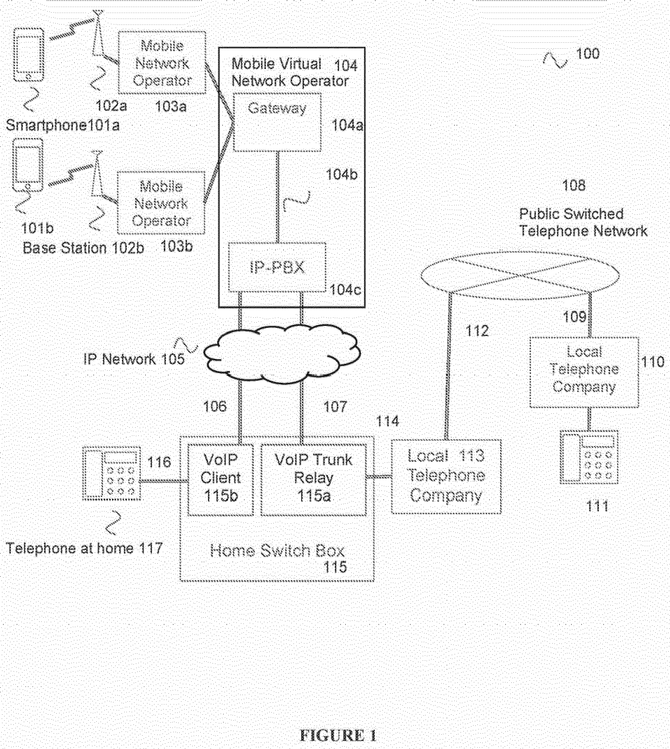

FIG. 1 illustrates an example system with a Home Switch Box and an MVNO, in accordance with embodiments of the invention. In a telephone system 100, smartphones 101a and 101b may communicate over cellular networks via radio towers 102a and 102b, respectively. Additionally, radio towers 102a and 102b may be managed and operated by mobile network operators (MNO) 103a and 103b. A mobile virtual network operator (MVNO) 104 may interconnect with the MNOs 103a and 103b. Additionally, MVNO 104 may use their networks to provide cellular telecommunication service of its own to its customers. In this embodiment, for example, the MVNO 104 may provide a voice over IP (VoIP) telephone service to its customers using the smartphones 101a and 101b. As seen in FIG. 1, MVNO 104 has a gateway 104a that interconnects with MNOs 103a and 103b. Additionally, MVNO 104 also has IP-based Private Branch Exchange (IP-PBX) 104c.

In examples, IP-PBX 104c may control a telephone network with terminals and clients with Voice-over-IP function, such as a telephone handset 117 over IP Network 105 and smartphones 101a and 101b on the MVNO network. The gateway 104a may manage some or all subscribing customers of the MVNO 104, and may maintain customer data of the some or all subscribing customers. Customer data may include, but may not be limited to, customer name and contact information, smartphone or other cellular telecommunication terminal identifiers, or subscriber numbers such as phone numbers that MVNO 104 may assign to respective smartphones 101a and 101b as each smartphone connects to the MVNO 104 via MNOs 103a and 103b. Additionally, the gateway 104a may authenticate access requests by smartphones 101a and 101b. Additionally, gateway 104a may decide to allow communication upon successful authentications, and manage data traffic with parameters including, but not limited to, network bandwidth allocation, network speed and volume of the data traffic for the allowed communication. As seen in FIG. 1, the Gateway 104a is connected to IP-PBX 104c directly via an internal core network 104b of the MVNO 104. It may also be possible to implement the IP-PBX 104c on an Internet cloud such that the connection between the gateway and the IP-PBX 104c requires transmission of data over the Internet (not shown in Figure 1). The IP-PBX 104c may manage VoIP services to MVNO customers. In one embodiment, the IP-PBX 104c may use Session Initiation Protocol (SIP) for signaling and controlling VoIP services. Additionally, IP-PBX 104c may maintain VoIP service customer information, including but not limited to, SIP user credentials for SIP clients, SIP user credentials for its connections to trunks, as well as status of the respective SIP users. IP-PBX 104c may authenticate SIP users when SIP users attempt to register themselves in order to use the VoIP service. Public Switched Telephone Network (PSTN) 108 is a public telephone network that enables local telephone companies 110 and 113 to connect phones to other phones for communications. PSTN 108 connects to a local telephone company 110 via trunk line 109, and ultimately is connecting to a telephone handset 111. Similarly a trunk line 112 connects to another local telephone company 113, which provides telephone services to homes. According to FIG. 1, the local telephone company 113 connects to a home via a fixed landline telephone line to Home Switch Box 115. Home Switch Box 115 may be installed at a location such as at home or at home-office. Home Switch Box 115 may contains a VoIP Trunk Relay 115a, which connects the trunk telephone line from the local telephone company 113 with the IP-PBX 104c at MVNO over IP Network 105 using a communication line 107. The Home Switch Box 115 may also contain a VoIP Client 115b, which connects with the IP-PBX 104c via IP network 105 using communication line 106.

In examples, Home Switch Box 115 is network equipment that is intended to be used at home or at a home-office. Home Switch Box 115 may be considered a personal switch box. Features of Home Switch Box 115 may include, but may not be limited to, multiple ports to accommodate cable connections to the Wide Area Network (WAN) and the LAN (Local Area Network), analog phone line connectors to connect analog phone lines using Foreign Exchange Subscriber (FXO or "Line"), and Foreign Exchange Office (FXO or "Phone") interfaces. Additionally, Home Switch Box 115 may feature wireless network interface such as Wi-Fi for LAN connectivity and 3G/4G/LTE for wireless WAN connectivity to communicate with IP-PBX 104c via IP Network 105, which may be a wireless network such as 3G/4G/LTE wide area network. Home Switch Box 115 may be implemented such that a person with ordinary skills of installing an ordinary telephone handset can install it. A simple installation of Home Switch Box 115, combined with self-initialization and self-testing features of Home Switch Box 115 and the phone service, may allow users to start using their home phone numbers with cellular phones and/or smartphones (e.g. smartphones 101a and 101b).

In one embodiment, users with a fixed landline phone number at home may install the Home Switch Box 115 by connecting one telephone line point to the telephone line 114 and the other to a telephone handset 117 via telephone line 116, and also connecting the box with the Internet. The telephone line 114 may be a landline telephone line. The communication lines 106 and 107 can share one physical cable such as the Ethernet cable or co-axial cable to connect from the home to the Internet via an Internet service provider for the home (not shown in FIG. 1). While not shown in FIG. 1, telephone network equipment such as a splitter, a terminal adapter / digital signal unit or modem may be present to connect phone equipment with the public telephone line. Home Switch Box 115 may be equipped with wireless network such as DECT or WiFi to connect with a home phone 117 when the home phone 117 is capable of voice communication over such a local wireless network. Telephone line 116 may be wireless connection using network protocols such as DECT or WiFi.

FIG. 1 shows one embodiment where the IP-PBX 104c is connected to one Home Switch Box 115. Embodiments of the invention, however, may allow the IP-PBX 104c to connect with more than one Home Switch Box 115. In such an instance, the IP-PBX 104c may connect with multiple upstream trunks, each Home Switch Box 115 interfacing with one local telephone company (such as 113). The IP-PBX 104c may connect to multiple phone numbers (e.g., fixed landline phone numbers) via a variety of Class 5 switches via Home Switch Box. Additionally, Session Border Controller may be used between the IP-PBX 104c and the Home Switch Box 115 in order to maintain stable services in a scalable manner while accommodating a large number of home switch boxes that are connected to the IP-PBX 104c. Session Border Controller may be implemented as a part of VoIP Trunk Relay 115a inside Home Switch Box 115 to manage VoIP sessions and demark the edge of the VoIP network serviced by the IP-PBX 104c. The Session Border Controller component within VoIP Trunk Relay 115a may also be used to protect the IP-PBX 104 by blocking network threats such as possible SIP-based attacks at Home Switch Box 115.

In some embodiments of the invention, Home Switch Box 115 may function as a combination of an FXO gateway, which is a gateway between access with a Local Telephone Company 113 and access with an IP-PBX 104c, and an FXS adapter. While not shown in FIG. 1, the FXO gateway feature of Home Switch Box 115 may function as an FXS adapter or ATA adapter if there is an IP Phone provider (not shown in FIG. 1) instead of the Local Telephone Company 113. In such a case, Home Switch Box 115 may manage at least two SIP user IDs to gain access to IP-PBX 104c and the IP Phone provider respectively.

In one embodiment according to the invention, Gateway 104a on MVNO 104 may control access to cellular wireless networks through MNOs 103a and 103b. In examples, IP-PBX 104c may control telephone calls on respective VoIP clients on Home Switch Box 115 over the IP Network 105 and on cellular devices such as smartphones 101a and 101b under the MVNO data services, and controls upstream connectivity through VoIP Trunk Relay 115a on Home Switch Box 115. A VoIP Trunk Relay 115a links the two telephone networks, one telephone network connecting upstream to the Public Switched Telephone Network 108 through the Local Telephone Company 113 based on a telephone number as assigned by the Local Telephone Company 113, and the other telephone network that is controlled by IP-PBX 104c. The coordinated control of both telephone signals and data communications among Gateway 104a, IP-PBX 104c, and at least one VoIP Trunk Relay 115a inside Home Switch Box 115 enables the invention to extend a telephone service to a location such as a home or an office to smartphones that operate under cellular networks, by simply installing Home Switch Box 115 at the location without changing complex configurations at Local Telephone Company 113 or on the Public Switched Telephone Network 106. The invention is effective in reducing costs of installation as well as maintaining the service to use telephone numbers that are assigned to one location from smartphones.

In one embodiment, IP-PBX 104c may be connected to a database that contains a blacklist and/or a white list, enabling to identify if a telephone number is assigned to a benign user or if a telephone number has been listed as rogue users such as fraud and criminals. IP-PBX 104c may use the database to search for a status of the telephone number whenever a telephone terminal 117 and smartphones 101a/101b make an outbound call or whenever they receive incoming calls. The IP-PBX 104c may block outbound and incoming calls if the telephone number is determined as being rogue.

In embodiments, while not shown in FIG 1, telephone system 100 may consist of multiple components that independently generate billing data. Mobile Network Operator (103a and 103b) may each contain a component to monitor data traffic to capture network bandwidth and data volume transmitted between Mobile Network Operator (103a and 103b) and Gateway 104a of Mobile Virtual Network Operator 104. Such a component in addition may generate billing data for invoicing Mobile Virtual Network Operator 104 for use of facilities operated by respective Mobile Network Operators. The billing may be based on aggregate data traffic bandwidth, data volume and in terms of a number of cell phones with a data transmission session with Mobile Virtual Network Operator 104. In addition, Mobile Virtual Network Operator 104 may include a component that monitors data traffic by its customers as well as phone calls made by and received by the customers, and the component within Mobile Virtual Network Operator 104 may generate billing data to its individual customers separately from the aforementioned billing generating components in Mobile Network Operators (103a and 103b). In addition, a Local Telephone Company 114 may contain a billing system to monitor telephone usage on the PSTN108 to bill customers that use phones with a home phone number.

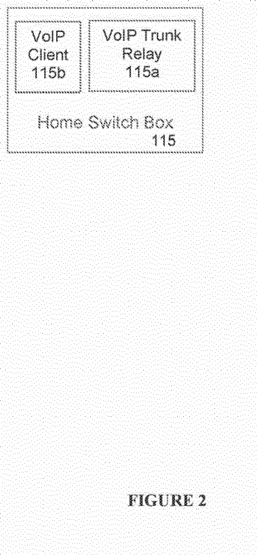

FIG. 2 illustrates an example Home Switch Box, in accordance with embodiments of the invention. In examples, a Home Switch Box 115 may also be associated with more than one phone number from a local telephone company. In such an instances, the Home Switch Box 115 may contain more than one instance of the VoIP Trunk Relay 115a component, each of which may connect to the IP-PBX 104c. The Home Switch Box 115 may also contain a VoIP Client 115b, which connects with the IP-PBX 104c via IP network 105 using communication line 106. Additionally, the VoIP Client 115b may also connect with a telephone handset 117 via telephone line 116 at home. The Home Switch Box 115 may also connect to sensors and home appliances at home, and may place outbound calls or send message to telephone handset 117 and smartphones 101a/101b via IP-PBX 104c. In some examples, MVNO 104 may maintain Home Energy Management Systems (HEMS) server (not shown in FIG 1), and the Home Switch Box 115 may periodically update status of the sensors and home appliances to the HEMS server and enables the HEMS server to control the sensors and home appliances at home.

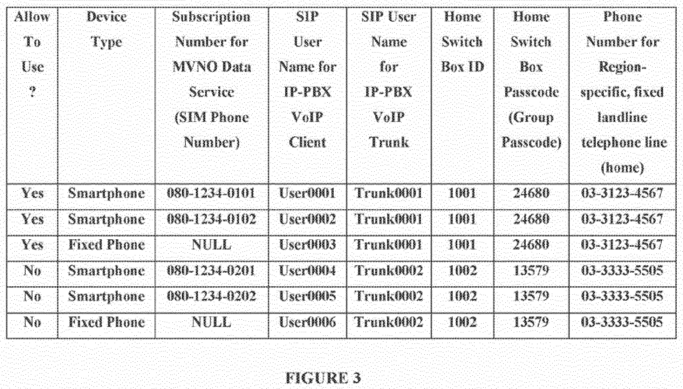

FIG. 3 may illustrate an example table that associates phone numbers among devices in the system, in accordance with embodiments of the invention. In particular, FIG. 3 may depict a data table in one embodiment of the invention, which may tie data that are collectively required to user a telephone number that is assigned to a home from cellular phones and other telephone handsets through installing the Home Switch Box 115. The table may include, but may not be limited to, a flag that indicates whether the system allows a device (e.g. smartphones 101a and 101b, fixed phone such as telephone handset 117) to use the service (Yes means to allow, No means not to allow), Device Type that indicate whether a device is smartphone, fixed phone or other types of telecommunication devices, Subscription Number for MVNO Data Service (a number that is associated with an MVNO service subscription, typically also associated with a Subscriber Information Module (SIM card) that is inserted on smartphones), SIP User Name for IP-PBX VoIP client, SIM User Name for IP-PBX VoIP Trunk, Home Switch Box Identifier, Home Switch Box Passcode (Group Passcode), and Phone Number for Region-specific, fixed landline telephone line (home). The Phone Number for Region-specific, fixed landline telephone line (home), for example, is represented by a telephone line 114 for a home that has the Home Switch Box 115.

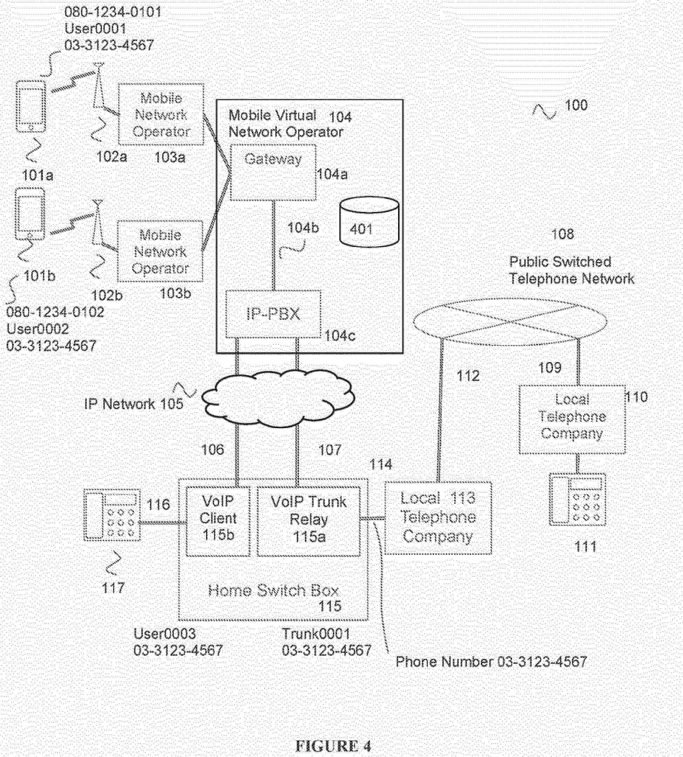

FIG. 4 illustrates an example system with phone numbers and ID associations, in accordance with embodiments of the invention. In particular, FIG. 4 depicts one embodiment of the invention to explain how user identifiers (IDs) and telephone numbers are integrated in the novel manner to implement the service that enable use of a telephone number for a home by cellular and other types of devices as specified. As seen in FIG. 4, smartphone 101a has a subscriber number 080-1234-0101, which may assigned and managed by the MVNO 104, and typically associated with a SIM card inside the smartphone 101a.. The phone number is for the MVNO data service over the network of MNO 103a. The smartphone 101a also has a SIP user name for the IP-PBX 104c as a VoIP client "User0001". The SIP user name "User0001" is assigned and managed by the IP-PBX 104c as the IP-PBX 104c signals and manages VoIP service to the system 100. The smartphone 101a is also associated with a phone number 03-3123-4567, which may be a telephone number that is assigned to a fixed landline telephone line 114 at home by the local telephone company 113. Similarly, a smartphone 101b has an MVNO subscription number of 080-1234-1012, a SIP user name as a VoIP client User0002, as well as a home telephone number 03-3123-4567. Furthermore, the telephone handset 117 at home has a SIP user name as a VoIP client User0003 and a home phone number 03-3123-4567. The telephone handset 117 does not have an MVNO SIM phone number because the telephone handset 117 is not associated with an MVNO data service over a cellular network via a mobile network operator, but is simply connected to the Home Switch Box 115. Figure 4 shows an instance where these three devices are associated with one home phone number 03-3123-4567, and are allowed to use the voice service with the home phone number. Data that may be used to associate between phone numbers and IDs as well as billing data on these customers may be stored in a database 401 by Mobile Virtual Network Operator 104.

FIG. 4 further depicts that the VoIP Trunk Relay component 115a within the Home Switch box 115 at home has Trunk0001 as a SIP user name for IP-PBX VoIP trunk, and 03-3123-4567 as a home phone number which is assigned by the local telephone company 113. The aforementioned three devices, namely the smartphones 101a and 101b and the telephone handset 117, are associated with the same trunk with a SIP user name "Trunk0001", effectively creating an association that these devices are to communicate with a trunk through the VoIP Trunk Relay 115a with a home phone number 03-3123-4567 inside the Home Switch Box 115.

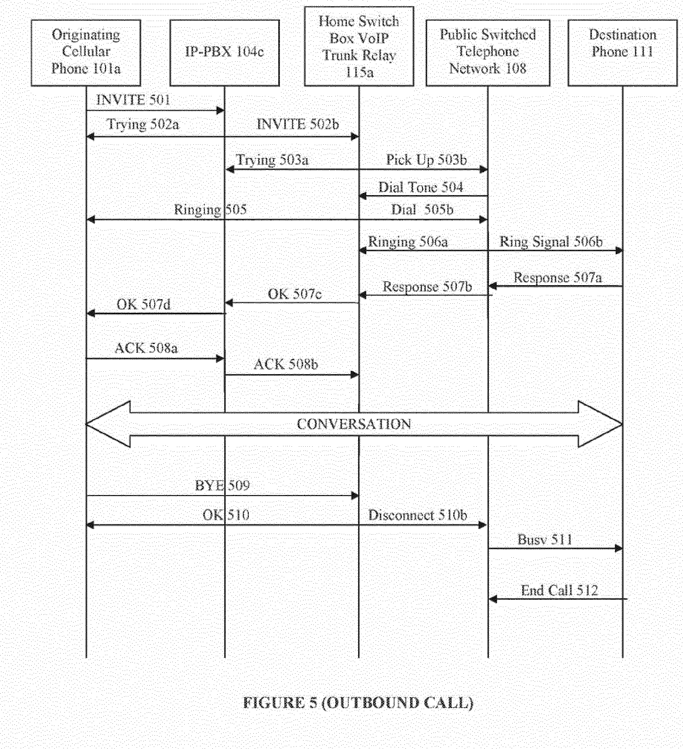

FIG. 5 illustrates an example sequence of processing an outbound call, in accordance with embodiments of the invention. In particular, FIG. 5 describes a signal sequence of making an outbound call from an originating cellular phone such as a smartphone 101a, to a destination telephone such as a telephone handset 111 in Figure 1. The sequence illustrated in FIG. 5 may require that the originating cellular phone and the Home Switch Box 115 (more specifically the VoIP Trunk Relay 115a) are already registered as SIP user to the IP-PBX 104c before starting the sequence. As shown in FIG. 5, the originating cellular phone may send an INVITE signal 501 to the IP-PBX 104c. The INVITE signal may include information specifying the destination phone number of the outbound call. Once the INVITE signal is received at the IP-PBX 104c, the IP-PBX 104c may send a Trying signal 502a to the originating cellular phone and also sends INVITE signal 502b to the VoIP Trunk Relay 115a of the Home Switch box 115. Upon receipt of the INVITE signal 502b, the VoIP Trunk Relay 115a may send a "Pick-up" 503c to the Public Switched Telephone Network (PSTN) 108 via a local telephone company 113. For simplicity of describing the embodiment, signaling of the local telephone company 113 may be combined with that of the PSTN 108. In examples, PSTN 108may send Dial Tone 504 to the VoIP Trunk Relay 115a.

The VoIP Trunk Relay 115a may send Ringing to the originating cellular phone via the IP-PBX 104c, while sending Dial signal 505b to PSTN 108. PSTN 108 may then send a Ring signal 506b to the destination phone (such as a telephone handset 111), while sends ringing 506a to the VoIP Trunk Relay 115a. While not shown in FIG. 5, the VoIP Trunk Relay 115a may send the Ringing 506a to the originating cellular phone. When a receiving party at the destination phone picks up the handset, the destination phone sends a Response 507a to PSTN 108, which then sends Response 507b to the VoIP Trunk Relay 115a. The VoIP Trunk Relay 115a sends OK 507c to the IP-PBX 104c. IP-PBX104c then sends OK 507d to the originating cellular phone. The originating cellular phone then sends ACK 508a to the IP-PBX 104c. The IP-PBX 104c then sends ACK 508b to the VoIP Trunk Relay 115a. Thereon, a phone call conversation takes place between the originating cellular phone and the destination phone, as shown with a wide, bidirectional arrow with CONVERSATION in FIG. 5 When the originating party hangs up the phone, the originating cellular phone sends BYE 509 to the VoIP Trunk Relay 115a to signify the termination of the call. The VoIP Trunk Relay 115a then sends Disconnect 510b to PSTN 108 while sending OK 510 to the originating cellular phone. PSTN 108 sends BUSY 511 signal to the destination phone. Finally the destination phone sends End Call 512 to PSTN 108, ending the phone call. While not shown in FIG. 5, the destination phone instead of the originating can initiate termination of the call, with having a signal sequence that is in a reciprocal manner as appropriate according to the telephone signal standards with the VoIP Trunk Relay 115a converting signals between signaling protocols with PSTN 108 with SIP with the IP-PBX 104c.

In the aforementioned embodiment based on FIG. 5, a telephone line to the home from the local telephone company 113 may be an analog telephone line. If a telephone service line protocol is anything other than analog, such as an IP-based telephone service, respective signaling protocols may be used as appropriate for the Home Box 115 to communicate with the local telephone company 113.

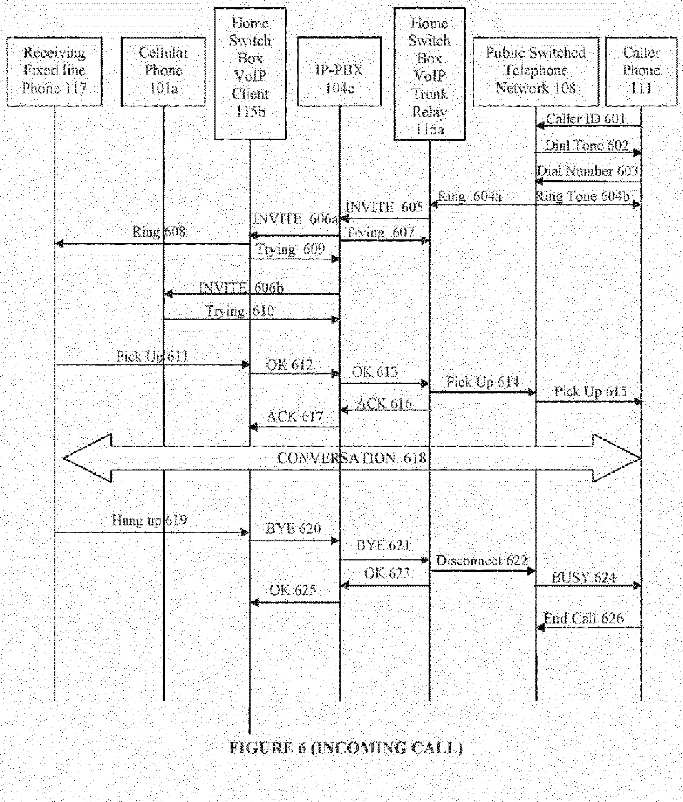

FIG. 6 describes a signal sequence chart for receiving an incoming call from a caller's phone, such as a telephone handset 111 across PSTN 108 by a receiving a fixed landline phone, such as the telephone handset 117 as shown in FIG. 1. When a calling party raises its phone handsets (off-hook), the caller phone sends Caller ID 601 to PSTN 108. PSTN 108 sends Dial Tone 602 to the caller phone. The caller phone then sends Dial Number 603, which signal contains a phone number of the destination, such as 03-3123-4567 in FIG.s 3 and 4. PSTN 108 sends Ring 604a to the Home Switch Box 115 (wherein the VoIP Trunk Relay 115a is located) receives the signal), while sending Ring Tone 604b to the caller phone. While not shown in FIG 6, the Home Switch Box 115a may receive Caller ID from PSTN 108. The VoIP Trunk Relay 115a then sends INVITE 605 to the IP-PBX 104c. The IP-PBX 104c then sends INVITE signals to all the devices that are associated with the destination phone number. In case of the configuration as shown in FIG.s 3 and 4, a telephone number 03-3123-4567 is associated with smartphones 101a and 101b with SIP user names of User0001 and User0002 respectively over the MVNO service network, as well as a fixed phone handset 117 with a SIP user name User0003. As shown in FIG. 6, the IP-PBX 104c sends Trying 607 to the VoIP Trunk Relay 115a. The IP-PBX104c then sends INVITE 606a to The VoIP Client 115b at the Home Switch Box 115, as well as sending INVITE 606b to the registered and corresponding SIP users at the cellular phone (e.g. smartphones 101a and 101b) under the MVNO network. The IP-PBX 104c sends INVITE to only the devices are associated with the destination phone number as specified by the table such as shown in FIG. 3.

Upon receiving INVITE signals (606a and 606b), the VoIP Client 115a sends Trying 609 and the cellular phone sends Trying 610 to the IP-PBX 104c respectively. Upon receiving INVITE 606a, the VoIP Client 115b sends Ring 608 to the receiving fixed line phone. When the receiving party picks up a ringing telephone at the receiving fixed line phone 117, the receiving fixed line phone 117 sends Pick Up 611 to the VoIP Client 115b. The VoIP Client 115b then sends OK 612 to the IP-PBX 104c if the IP-PBX 104c may be used as a SIP proxy. The IP-PBX 104c then sends OK to the VoIP Trunk Relay 115a. If the IP-PBX 104c is not a SIP proxy, the VoIP Client 115b may send OK directly to the VoIP Trunk Relay 115a. The VoIP Trunk Relay 115a then sends Pick Up 614 to PSTN 108 while sending ACK 616 to the IP-PBX 104c or to the VoIP Client directly as appropriate otherwise. The IP-PBX 104c then sends ACK 617 to the VoIP Client 115b. Thereon, a phone call conversion 618 takes place between the caller phone and the receiving fixed line phone. If a ring was picked up by a cellular phone over the MVNO network, the cellular phone sends the same signal sequence as the aforementioned manner by the receiving fixed line phone. When the receiving fixed line phone put down the handset to end the call, the receiving fixed line phone sends Hang Up 619 to the VoIP Client 115b. The VoIP Client 115b then sends BYE 620 to the IP-PBX 104c. The IP-PBX sends BYE 621 to the VoIP Trunk Relay 115a. The VoIP Trunk Relay 115a then sends Disconnect 622 to PSTN 108 while sending OK 623 to the IP-PBX 104c. The IP-PBX 104c then sends OK 625 to the VoIP Client 115b to end the VoIP call segment. PSTN 108 sends BUSY 624 to the caller phone causing the caller phone to output a busy sound. When the handset of the caller phone is put down, the caller phone sends End Call 626 to the PSTN 108.

While FIG. 6 shows an example of the receiving fixed line phone initiating the end of the call, one embodiment accommodates a case where a caller phone initiates the end of the call. In such a case, a Hang Up signal is sent by the caller phone, and steps through the call termination sequence in a reciprocal manner.

While FIG. 6 shows an example of receiving the call at a fixed line phone 117, a similar signal sequence may be implemented to receive calls on cellular phone 101a over the cellular wireless network under MNO 103a through Gateway 104a under MVNO 104.

In one embodiment, Gateway 104a may monitor telephone call signals between IP-PBX 104c and cellular phone (or smartphone 101a) that are sent through Gateway 104a. Upon detecting signals, such as ACK 508a and Pick Up 611, which indicate start of conversation, Gateway 104a may change data network bandwidth allocation between the cellular phone and the IP-PBX 104c and allocate and reserve a network bandwidth that is sufficient to transmit voice stream data while the conversation takes place, in order to maintain the quality of voice service. Gateway 104a may change the network bandwidth allocation to a narrower bandwidth upon end of the conversation, by detecting signals such as BYE 509. While not shown in figures, Gateway 104a may control data network bandwidth allocation between the cellular phone and the IP network 105, in case such as but not limited to if IP-PBX 104c is not acting as a SIP proxy.

In one embodiment of the invention, IP-PBX 104c may send a request signal to Gateway 104a to allocate and de-allocate network bandwidth by specifying one or more of cellular phones.

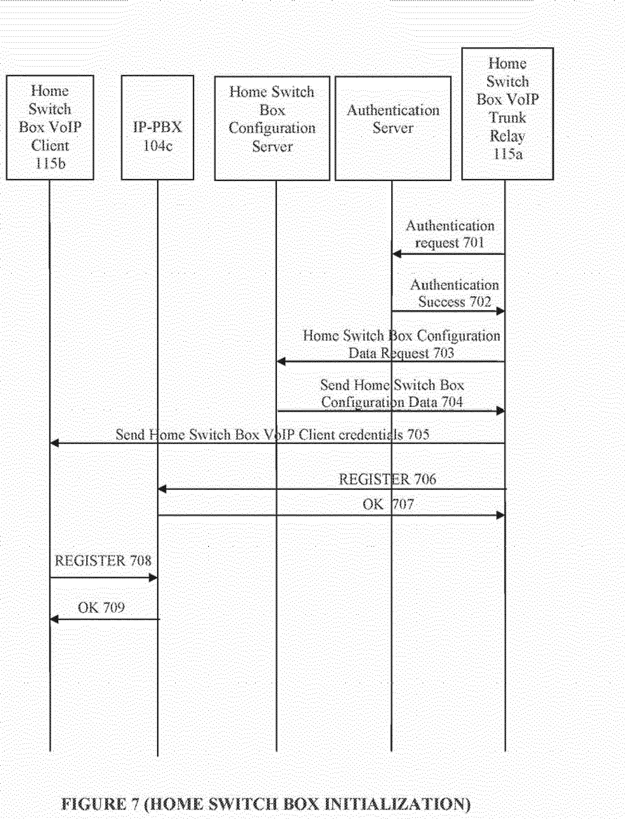

FIG. 7 describes a signaling sequence when the Home Switch Box 115 is installed and initializes itself. While not shown in FIG. 1, Authentication server is located within the MVNO 104. The authentication server maintains authentication credentials of Home Switch Boxes as they need to access the IP-PBX as well as configuration data for configuring themselves. Home Switch Box configuration manager also is located in and managed by MVNO 104, and the configuration manager maintains configuration settings of Home Switch Boxes for downloading and for self-configurations. First, the Home Switch Box 115, more specifically the VoIP Trunk Relay 115a, sends Authentication request to 701 the authentication server via the Internet. The authentication server returns success 702 upon processing the authentication request and the credential is satisfactory. The VoIP Trunk Relay 115a then sends a Home Switch Box Configuration Data Request 703 to the configuration server. If the previous request for authentication failed, the configuration server returns an error to the data request. Otherwise, the configuration server sends the Home Switch Box configuration data 704 to the VoIP Trunk Relay 115a. The Home Switch Box configuration data may contain domain information of the authentication server, authentication identifiers, passwords, credentials to use SIP protocol with the IP-PBX 104c, and any of IDs such as Home Switch Box ID, Home Switch Box Passcode (Group Passcode) as illustrated in FIG 3. The Authentication request may be generated by the Home Switch Box 115 by MAC address of the Home Switch Box 115a. Then, the VoIP Trunk Relay 115a sends to the VoIP Client 115b Home Switch Box VoIP Client credentials, which the VoIP Trunk Relay 115a receives from the configuration server. The VoIP Trunk Relay 116a then sends REGISTER 706 to the IP-PBX 104c, and the IP-PBX 104c sends OK 707. The VoIP Relay 116a is now ready to handle incoming and outgoing communications with IP-PBX 104c as well as with the trunk to the local telephone company 113. After receiving the Home Switch Box VoIP Client credentials, the VoIP Client 115b sends REGISTER 708 to the IP-PBX 104c. Finally IP-PBX 104c sends OK 704 to the VoIP Client 115b, so that the VoIP Client 115b is now ready to use the VoIP service that is tied with the home phone number, which association data is stored in a table in the IP-PBX 104c.

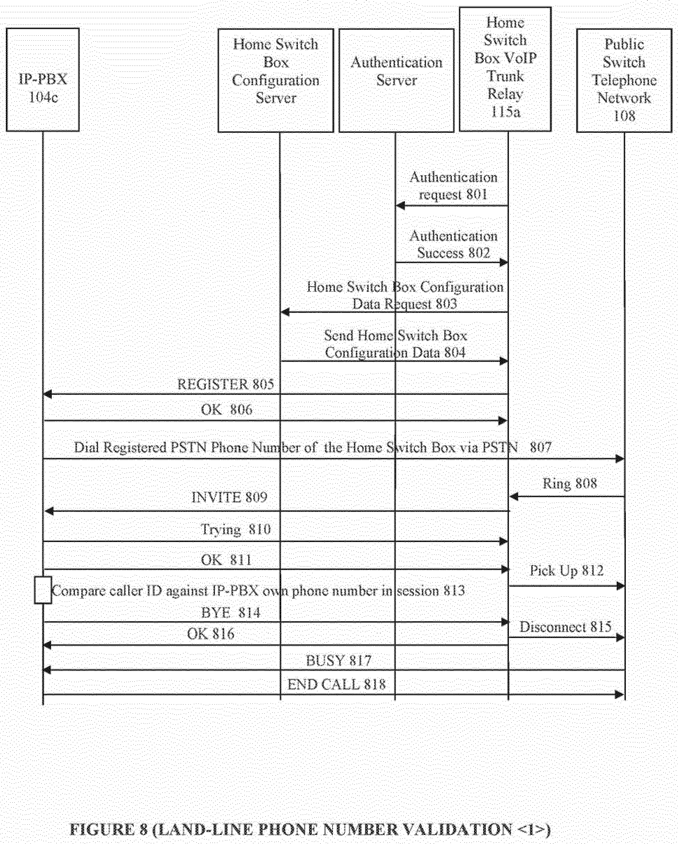

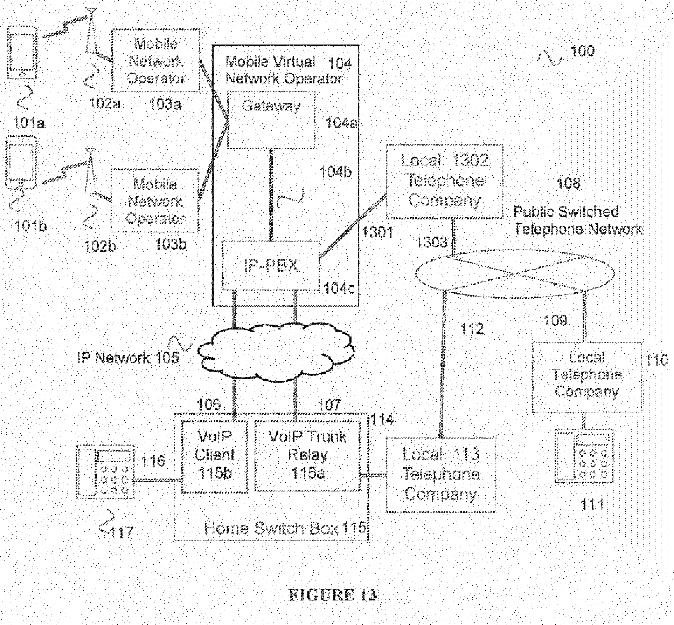

FIG. 8 describes a sequence of communications as the Home Switch Box 115 validates against the pre-registered service information at MVNO whether the Home Switch Box 115 is being installed with association with a fixed landline phone number that was intended. Such a validation is essential to correctly install the Home Switch Box 115. The validation prevents a situation where the Home Switch Box 115 is placed at a home with a phone number that is different from originally intended phone number. If the system does not validate the installation, there might be a risk where a rogue person installs the Home Switch Box 115 at a home with a phone number without knowledge by the home owner with rogue intent of eavesdropping phone calls by taking and placing calls at a cellular phone or smartphone. The sequence of validation may start when the Home Switch Box is powered on or at a random frequency as decided by the Home Switch Box. In this embodiment, IP-PBX 104c is capable of placing an outbound phone call to a destination phone number via PSTN 108, as shown in FIG. 13. IP-PBX 104c connects directly to a local telephone company 1302 via a phone line 1301, and the local telephone company 1302 connects to PSTN 108 via line 1303. First, the VoIP Trunk Relay 115a of the Home Switch Box 115 sends an Authentication request 801 to the authentication server. The authentication server authenticates the device, and, if successfully, returns Authentication Success 802 to the VoIP Trunk Relay 115a. As illustrated in FIG 8, the VoIP Trunk Relay 115a sends Home Switch Box Configuration Data Request 803 to the configuration server. The configuration server then sends configuration data for the Home Switch Box 115. The VoIP Trunk Relay 115a sends REGISTER 805 to the IP-PBX 104c. The IP-PBX 104c sends OK 806 to the VoIP Trunk Relay 115a. The IP-PBX then places a call to the Home Switch Box 115 by dialing a phone number that the Home Switch Box is associated with (the fixed landline phone number such as 03-3123-4567 in FIG. 3) by dialing the number through the local telephone company 1302 and through PSTN 108. PSTN 108 sends Ring 808 to the VoIP Trunk Relay 115a. The VoIP Trunk Relay 115a then sends INVITE 809 to the IP-PBX 104c. The IP-PBX 104c sends trying 810, and then OK 811 to the VoIP Trunk Relay 115a. The VoIP Trunk Relay sends Pick Up 812 to PSTN 108. At this time, the call is in session and the IP-PBX 104c detects whether the incoming call is from a phone number of the IP-PBX 104c itself based on caller ID. The IP-PBX 104c then hangs up by sending BYE 814 to the VoIP Trunk Relay 115a. The VoIP Trunk Relay 115a sends Disconnect 815 to PSTN 108, and sends OK 816 to the IP-PBX 104c. PSTN 108 then sends BUSY 817 to the IP-PBX 104c that were in call session. The IP-PBX 104c then sends END CALL 818 to signify the end of the call. The caller ID that it received with the incoming call is the same as the phone number of the IP-PBX 104c itself facing PSTN 108, and also if the SIP user name (e.g. Trunk0001 on FIG. 3) of the SIP client that sent the INVITE 809 is associated with the phone number (e.g. 03-3123-4567) that the IP-PBX 104c has dialed out, then the IP-PBX 104c determines that the validation has succeeded. If the validation fails, then the IP-PBX would not respond to any further INVITE signal from the VoIP Trunk Relay 115a that corresponds to the SIP username (e.g. Trunk0001 on FIG. 3).

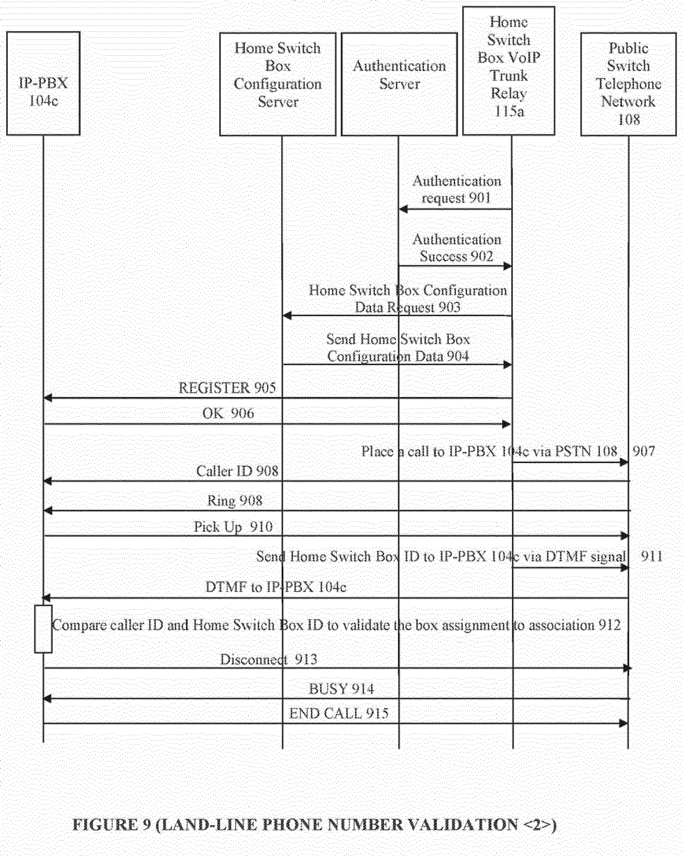

FIG. 9 describes one embodiment of validating a fixed landline phone number against service registration. In contrary to the previous example of embodiment based on FIG. 8, the VoIP Trunk Relay 115a places a call via PSTN 108 to the IP-PBX 104c. The VoIP Trunk Relay 115a of the Home Switch Box 115 sends an authentication request 901 to the authentication server. Upon successful authentication, the authentication server sends Authentication Success message 902 to the VoIP Trunk Relay 115a. The VoIP Trunk Relay 115a then sends Home Switch Box Configuration Data Request 903 to the Home Switch Box Configuration server that is located within MVNO 104. The configuration server responds to the request sends configuration data 904 to the VoIP Trunk Relay 115a. The VoIP Trunk Relay 115a then sends REGISTER 905 to the IP-PBX 104c. The IP-PBX responds by sending OK 906 to the VoIP Trunk Relay 115a. The VoIP Trunk Relay 115a then places a phone call to the IP-PBX 104c to PTSN 108 via a local telephone company. The phone number is a part of the configuration data that the configuration server has sent to the VoIP Trunk Relay 115a. PSTN 108 then sends Caller ID 908 to the IP-PBX 104c, followed by sending Ring 908 to the IP-PBX 104c. The IP-PBX 104c sends Pick Up 910 to the PSTN 108 via a local telephone company 1302. At this point a call is in session. VoIP Trunk Relay 115a sends an identification number that corresponds to the Home Switch Box (Home Switch Box ID) by using Dial Tone Multi-Frequency (DTMF) or other means over the call in session. In one embodiment, the Home Switch Box ID along with the Home Switch Box Passcode (Group Passcode) is stored in a table such as shown in FIG. 3. The IP-PBX 104c takes the values sent by the VoIP Trunk Relay 115a, and compares against data from a table such as shown in FIG. 3. The IP-PBX 104c sends Disconnect 913 to the PSTN 108. PSTN 108 sends BUSY signal 914 to the IP-PBX 104c. The IP-PBX 104c then sends END CALL 915 to terminate the call and the validation steps.

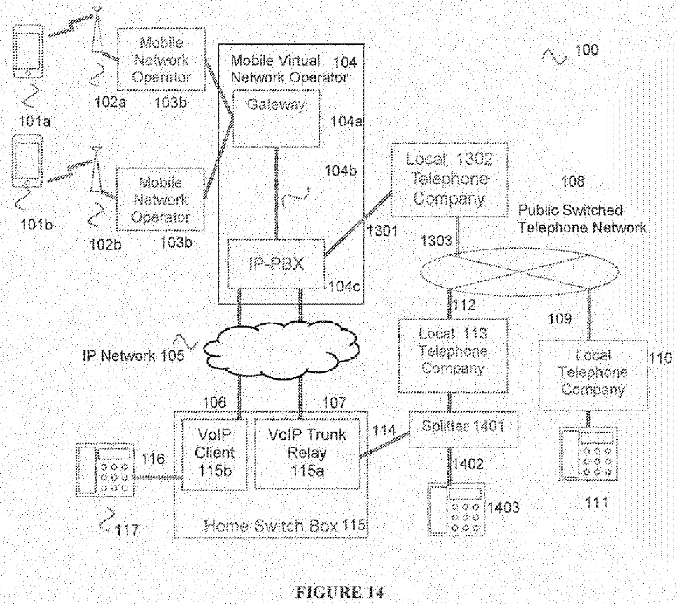

FIG. 14 describes an embodiment where there is a splitter 1410 between the local telephone company 113 and the Home Switch Box 115, and a telephone handset 1403 is connected to the splitter 1401 via a phone line 1402. The telephone handset 1403 is not connected to the Home Switch Box 115, and is not a part of the call signaling controls by the IP-PBX 104c. The telephone handset 1403 is connected to the local telephone company 113 via splitter 1401. Under this scenario, an incoming call to the home phone number results in ringing not only the telephone handset 117 and the smartphones 101a and 101b, which are associated with the home phone number (e.g. 03-3123-4567 in FIG. 3), but also the telephone handset 1403.

In one embodiment as shown in FIG. 14, the IP-PBX 104c enables MVNO cellphones (such as smartphones 101a and 101b) to place a phone call to their respective home phone number, not via the VoIP Trunk Relay 115a, but through the outbound phone line 1301 directly from the IP-PBX 104c via the local telephone company 1302 through PSTN 108. There is preassigned pre-fix number, such as "*0#". When the IP-PBX 104c receives dial number from its VoIP client device, such as the cellular phone (such as 101a and 101b) and telephone handsets 117 that are connected to the VoIP client 115b of the Home Switch Box 115, the IP-PBX 104c places an outbound telephone call to a home phone number (a phone number for region-specific, fixed landline telephone line as shown in FIG. 3) via phone line 1301 through the local telephone company 1302. For example, if the IP-PBX 104c places a call to a phone number 03-3123-4567, the call is routed through PSTN 108 via local telephone company 1302, and the local telephone company 113 sends Ring to the telephone handset 1403 as well as the VoIP Trunk Relay 115a. The VoIP Trunk Relay 115a then sends INVITE to the IP-PBX 104c. IP-PBX 104c maintains call session status, and determines that the incoming call from the VoIP Trunk Relay 115a is the attempted outbound call that the IP-PBX 104c has placed as pre dial-out INVITE signal from the originating cellular phone. The IP-PBX 104a sends INVITE to the VoIP Client 115b which does not have Smartphone as its Device Type in the table as shown in FIG. 3, and does not send INVITE to any other device in the table. As a result, only the telephone handsets 1403 and 117 at home ring, regardless of whether the telephone handset is associated with the Home Switch Box 115, waiting for someone at home to answer the call. Such a short-cut dialing on a smartphone is convenient to phone home without remembering telephone line configuration at home.

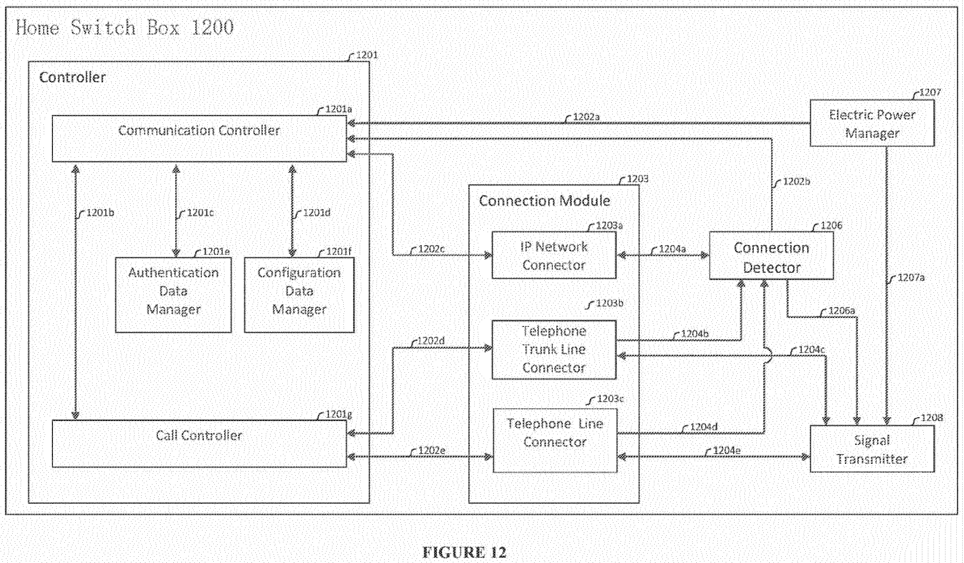

FIG. 12 illustrates an example of an internal module architecture of the Home Switch Box 115, in accordance with embodiments of the invention. The example of an internal module architecture of the Home Switch Box 115 as seen in FIG. 12 may be referred to as a Home Switch Box system 1200. In particular, the Home Switch Box system 1200 as seen in FIG. 12 comprises a Controller 1201, Connection Module 1203, Connection Detector 1206, Electric Power Manager 1207 and Signal Transmitter 1208. The Controller 1201 comprises a Communication Controller 1201a, which is connected within the Controller 1201 to Call Controller 1201g via connection 1201b, Authentication Data Manager 1201e via connection 1201c, and Configuration Data Manager 1201f via connection 1201d. The Communication Controller 1201a may control signals that are associated with some or all of the calls routed through, including those on the trunk and on VoIP client that is attached to the Home Switch Box 115. The Communication Controller 1201a may also control communications associated with exchanging authentication data with an authentication server at MVNO 104. In some examples, these communications may be associated with downloading configuration data for the Home Switch Box 115 from the configuration server at the MVNO 104.

In examples, Authentication Data Manager 1201e and Configuration Data Manager 1201f may manage credentials for authenticating the Home Switch Box 115 and configuration data that the Home Switch Box 115 may require in determining access to the IP-PBX and other external components respectively. Communication Controller 1201 is connected to IP Network Connector 1203a within the Connection Module 1203 via connection 1202c. The IP Network Connector 1203a may connect the Home Switch Box 115 to the IP Network 105 via Connection Detector through connection 1204a and then through Signal Transmitter 1208 via connection 1206a. The Home Switch Box 115 may connect with IP-PBX 104c, as well as the authentication server and the configuration server via the IP Network 105. The Communication Controller 1201a may also receive a signal from Connection Detector 1206 via connection 1202b when the Connection Detector 1206 detects any change in network connection on the Home Switch Box 115. Additionally, communication Controller 1201a may request to reauthenticate or re-download configuration data for the Home Switch Box 115 upon detecting the change.

Call Controller 1201g may connect with Telephone Trunk Line Connector 1203b via connection 1202d. Telephone Trunk Line Connector 1203b may implement the VoIP Trunk Relay 115a. In examples, telephone Trunk Line Connector 1203b may connects with Connection Detector 1206 via connection 1204b if Trunk Line Connector 1203b detects any change in connection on the trunk line, and may also connect with Signal Transmitter 1208 via connection 1204c. Call Controller 1201g may also connect with Telephone Line Connector 1203c via connection 1202e. In examples, telephone Line Connector 1203c may be a connector to connect a telephone handset 117 via phone line 116 with an RJ11 cable. Telephone Line Connector 1203c may connect with Connection Detector 1206 and may notify via connection 1204d if Telephone Line Connector 1203c detects any change in line connection. Telephone Line Connector 1203c may also connect with Signal Transmitter 1208 via connection 1204e to transmit signal to the telephone handset 117. Electric Power Manager 1207 may manage electric power supply to the Home Switch Box 115 and its internal Home Switch Box system 1200. Electric Power Manage 1207 may notify any change in power supply to the Home Switch Box 115, such as Power ON/OFF status, to Communication Manager 1201a as well as to Signal Transmitter 1208.

In embodiments, the Home Switch Box 115 may allow the telephone handset 117 to be operational even during power outage, or other examples when the lack of electric power supply to the Home Switch Box 115 may otherwise disable the Home Switch Box 115 from communicating with the IP-PBX 104 via the IP Network 105. Signal Transmitter 1208 may directly connect its connection 1204c (connecting Telephone Trunk Line Connector 1203b and Signal Transmitter 1208) and its connection 1204e (connecting the Signal Transmitter 1208 and the Telephone Line Connector 1203c) when Signal Transmitter 1208 detects that a connection 1207a, which connects Signal Transmitter 1208 with Electric Power Manager 1207, is OFF or has a lack of electricity current. Additionally, Signal Transmitter 1208 may disconnect the two connections 1204c and 1204e when a power status indication is ON, thereby connection between the telephone handset 117 and the trunk line is always via the IP-PBX 104.A local telephone company 113 may continue to provide analog telephone service during power outage in electric power supply, as electricity is supplied through telephone lines, which are typically independent from electric power supply lines.

In some examples, the Connection Detector 1206 may detect connection of new wire to ports such as an Ethernet cable connecting to an IP port or a telephone cable connecting to a telephone adapter, triggering the Home Switch Box 115 to update its configuration data by requesting to download from the configuration server.

When an analog phone such as the telephone handset 117 is connected to the Home Switch Box 115 via telephone line 116 with interface such as RJ11, the Home Switch Box 115 may detect the connection via monitoring electric current at the analog phone port, and, upon detection, may request and retrieve a session initiation protocol (SIP) user credential from the configurations Server, and register the SIP VoIP client to the IP-PBX to enable making and receiving calls by using the analog phone.

In one embodiment, the following steps may be taken to initialize the Home Switch Box 115 and self-configure for connectivity and also validate the connection with the home phone number. At a first step, the Home Switch Box 115 may request for authentication at the Authentication Server. At a second step, the Home Switch Box 115 may download a configuration data for the Home Switch Box 115 from the Configuration Server. In examples, configuration data may contain PSTN phone number(s) of IP-PB, IP address(es) of IP-PBX, and/or SIP trunk user credentials. At step three, the Home Switch Box 115 may register to the IP-PBX as a SIP Trunk user. At step four, the Home Switch Box 115 may place a test call to IP-PBX via PSTN with Caller ID, and wait for Disconnect. At step five, Home Switch Box 115 may receive a test call from IP-PBX via PSTN for validation of the receiving call by the IP-PBX.

In some examples, IP-PBX 104c may make an outbound call via PSTN 108 to the fixed landline phone number without ringing any VoIP Client such as the VoIP Client 115b, so that only the phones such as the telephone handset 1403, which are not registered as VoIP clients may ring. In examples, the IP-PBX 104c may receive the INVITE signal from the VoIP Trunk Relay 215a for testing, and may detect and recognize the fact about the incoming call from the IP-PBX 104c itself for logging at the IP-PBX 104c

In one embodiment, a new VoIP Client 115a at home or a new cellular phone over the MVNO 104 network (such as smartphones 101a and 101b) can be added to a group of devices that are associated with a home phone number as follows. First, using an exemplary case where a VoIP Client 115a is being added to the group, the VoIP Client 115a may first register with IP-PBX 104c. From the VoIP client handset (the telephone handset 117), a user may dial a predesignated special phone number (e.g. *23363), and may enter a Home Box ID, Group Passcode, and a fixed landline phone number. The input of the fixed landline phone number may be omitted if the phone number is already associated with a Home Box ID. Additionally, in order to minimize a number of steps needed to add the VoIP client. IP-PBX 104c, the management table (such as shown in FIG. 3) may be updated if all three data match with data on the table. In examples, IP-PBX 104c may place an outbound call to the fixed landline phone number via PSTN for verification of the change. Once the addition of the VoIP client succeeds, the IP-PBX 104c may include that VoIP client in processing future calls on the fixed landline phone number (the home phone number).

In one embodiment, a VoIP client that is in a group of devices for a home phone number can be detached as follows. From a VoIP client handset being used and registered, a user may dial a predesignated special phone number (e.g. *233163), and enter a Home Box ID, Group Passcode, and Fixed landline phone number. The IP-PBX may update the management table if all three data match with data on the table. Additionally, IP-PBX may place an outbound call to the fixed landline phone number via PSTN for verification of the change.

According to embodiments of the invention, a user may install the Home Switch Box 115 by connecting the Home Switch Box 115 with a telephone handset 117, with a upstream telephone line to a splitter 1401 or to a local telephone company 113, with an Internet, and the electric power supply. The Home Switch Box 115 may then initialize by being authenticated and configured, and may set up connectivity with the IP-PBX 104c, and may include validating the home phone number against a phone number that is preregistered with the service, without needing to reconfigure a fixed landline telephone service by the local telephone company 113.

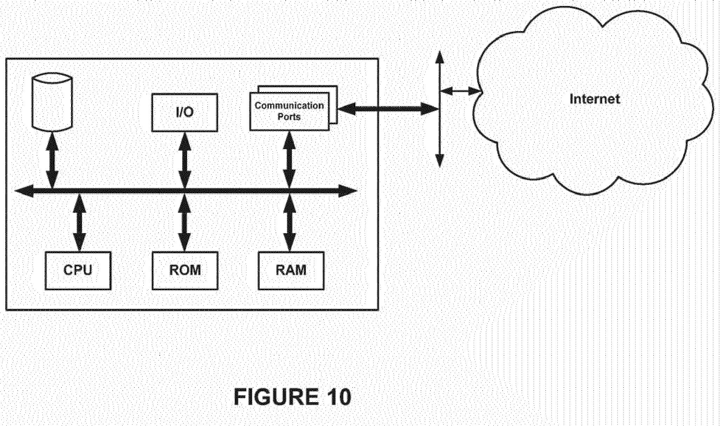

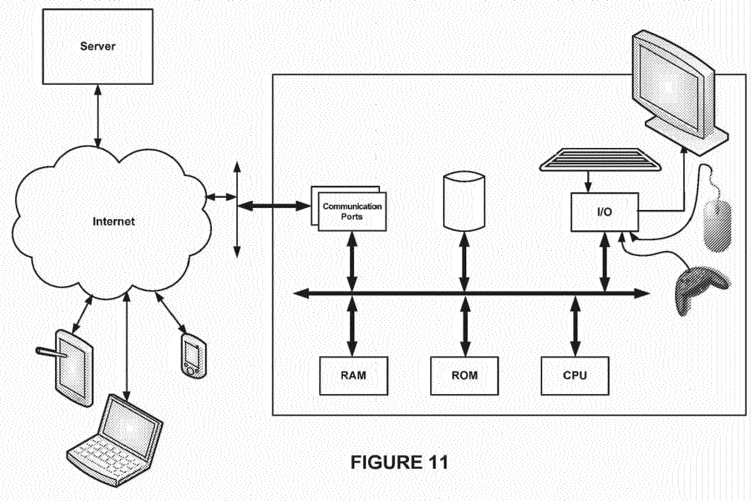

FIGs. 10 and 11 provide examples of functional block diagram illustrations of computer hardware platforms. In particular, FIG. 10 shows an example of a network or host computer platform, as may be used to implement a server or electronic devices, in accordance with embodiments of the invention. FIG. 11 depicts a computer with user interface elements, as may be used to implement a personal computer, electronic device, or other type of work station or terminal device, in accordance with embodiments of the invention. In examples, the computer of FIG. 11 may also act as a server when appropriately programmed. The systems and methods described herein may be implemented in or upon such computer hardware platforms in whole, in part, or in combination. The systems and methods described herein, however, are not limited to use in such systems and may be implemented or used in connection with other systems, hardware or architectures. The methods described herein may be implemented in computer software that may be stored in the computer systems and servers described herein.

A computer system or server, according to various embodiments, may include a data communication interface for packet data communication. The computer system or server may also include a central processing unit (CPU), in the form of one or more processors, for executing program instructions. The computer system or server may include an internal communication bus, program storage and data storage for various data files to be processed and/or communicated by the server, although the computer system or server may receive programming and data via network communications. The computer system or server may include various hardware elements, operating systems and programming languages. The server or computing functions may be implemented in various distributed fashions, such as on a number of similar or other platforms.

The computer system may also include input and output (I/O) devices such as a mouse, game input device or controller, display, touch screen or other I/O device or devices in various combinations.

The methods described herein may be implemented in mobile devices such as mobile phones, mobile tablets and other mobile devices with various communication capabilities including wireless communications, which may include radio frequency transmission infrared transmission or other communication technology. Thus, the hardware described herein may include transmitters and receivers for radio and/or other communication technology and/or interfaces to couple to and communication with communication networks.

The methods described herein may be implemented in computer software that may be stored in the computer systems including a plurality of computer systems and servers. These may be coupled over computer networks including the internet. Accordingly, an embodiment includes a network including the various system and devices coupled with the network.

Further, various methods and architectures as described herein, such as the various processes described herein or other processes or architectures, may be implemented in resources including computer software such as computer executable code embodied in a computer readable medium, or in electrical circuitry, or in combinations of computer software and electronic circuitry.

Aspects of the systems and methods described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the systems and methods include: microcontrollers with memory, embedded microprocessors, firmware, software, etc. Furthermore, aspects of the systems and methods may be embodied in microprocessors having software-based circuit emulation, discrete logic (sequential and combinatorial), custom devices, fuzzy (neural network) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

It should be noted that the various functions or processes disclosed herein may be described as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, email, etc.) over the Internet and/or other computer networks via one or more data transfer protocols (e.g., HTTP, FTP, SMTP, etc.). When received within a computer system via one or more computer-readable media, such data and/or instruction-based expressions of components and/or processes under the systems and methods may be processed by a processing entity (e.g., one or more processors) within the computer system in conjunction with execution of one or more other computer programs.

Unless specifically stated otherwise, as apparent from the following discussions, it is appreciated that throughout the specification, discussions utilizing terms such as "processing," "computing," "calculating," "determining," or the like, may refer in whole or in part to the action and/or processes of a processor, computer or computing system, or similar electronic computing device, that manipulate and/or transform data represented as physical, such as electronic, quantities within the system's registers and/or memories into other data similarly represented as physical quantities within the system's memories, registers or other such information storage, transmission or display devices. It will also be appreciated by persons skilled in the art that the term "users" referred to herein can be individuals as well as corporations and other legal entities. Furthermore, the processes presented herein are not inherently related to any particular computer, processing device, article or other apparatus. An example of a structure for a variety of these systems will appear from the description herein. In addition, embodiments of the invention are not described with reference to any particular processor, programming language, machine code, etc. It will be appreciated that a variety of programming languages, machine codes, etc. may be used to implement the teachings of the invention as described herein.

Unless the context clearly requires otherwise, throughout the description and the claims, the words 'comprise,' 'comprising,' and the like are to be construed in an inclusive sense as opposed to an exclusive or exhaustive sense; that is to say, in a sense of 'including, but not limited to.' Words using the singular or plural number also include the plural or singular number respectively. Additionally, the words 'herein,' 'hereunder,' 'above,' 'below,' and words of similar import refer to this application as a whole and not to any particular portions of this application. When the word 'or' is used in reference to a list of two or more items, that word covers all of the following interpretations of the word: any one or more of the items in the list, all of the items in the list and any combination of the items in the list.

The various features described above may be combined in various combinations. Without limitation, features described may be combined with various systems, methods and products described. Without limitation, multiple dependent claims may be made based on the description herein. While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

While preferred embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention.

## Claims

1. A method of placing a phone call using a switch box, the method comprising:
receiving a first request from a mobile device on a wireless network to connect to a data network;
authenticating the first request using a subscriber database on the data network;
generating a data connection with the mobile device on the data network;
receiving, by an IP-PBX server, a second request from the mobile device for voice-over-IP service registration on a voice-over-IP network;
authenticating the second request based on the subscriber database on the data network;
receiving, by the IP-PBX server, a dialing request for dialing a first telephone number from the mobile device over the data network;
identifying, by the IP-PBX server, a switch box based on the mobile device information stored in the subscriber database on the data network;
sending, using the IP-PBX server, the dialing request to the switch box over the data network; and
dialing, using the switch box, the first telephone number on a telephone landline with a second telephone number as a caller number.

2. A method of claim 1, wherein,
the mobile device is on a mobile network operator network;
the data network is a mobile virtual network operator (MVNO) data network;
the subscriber database is an MVNO subscriber database;
the telephone line is a landline telephone network; and
the second telephone number is specifically assigned to the telephone line.

3. A computer-implemented system for telephone service with a switch box, comprising:
a wireless network, wherein a mobile device is connected to the wireless network;
a data network having a subscriber database containing service subscriber information for authentication of the mobile device to access the data network, the data network further having an IP-PBX server that is connected to a gateway on the data network, and wherein the gateway on the data network further connects the wireless network to the data network;
a telephone network that is connected to a Public Switched Telephone Network, wherein the telephone network is associated with a first telephone number that is region-specific and addressable on the Public Switched Telephone Network; and
a switch box having a voice-over-IP (VoIP) network that is controlled by the IP-PBX server on the data network, wherein the switch box is connected to the IP-PBX server, wherein the switch box is further connected to the telephone network, and wherein an association between the mobile device and the switch box is stored at the subscriber database,
wherein a call that is initiated by the mobile device is routed through the switch box so as to initiate the call using the first telephone number to call a second telephone number on the Public Switched Telephone Network, wherein the routing of the call originating from the mobile device on the switch box is based on an association between the mobile device and the switch box that is stored in the subscriber database.

4. A computer-implemented system according to claim 3, wherein the switch box comprises:
a VoIP trunk relay connecting with the IP-PBX server through a first connection to an IP network and a second connection with a local telephone exchange;
a VoIP client connecting with the IP-PBX server via a third connection to the IP network; and,
a switch box manager connecting with the subscriber database via a fourth connection.

5. A computer-implemented system according to claim 3 or 4, wherein
the first telephone network is a landline telephone network;
the first telephone number is a geospatial number;
the wireless network is a mobile network operator network; and
the data network is a mobile virtual network operator network controlling access from the wireless network and to the switch box.

6. The computer-implemented system in claim 5, further comprising:
a mobile virtual network operator for interconnecting with the mobile network operator using the gateway,
wherein the mobile virtual network operator changes a network bandwidth resource allocation for data communications by the mobile terminals when a voice data stream is transmitted to maintain a quality of service for the voice data stream transmission over the MVNO network.

7. The computer-implemented system in claim 3,
wherein the IP-PBX requests the gateway and the gateway increases network bandwidth allocation for communication between a terminal handset and the IP network when a telephone call conversation starts thereby maintaining a quality of voice service during the call.

8. The computer-implemented system in claim 5,
wherein the wireless network contains a first billing system, the telephone network contains a second billing system, and the data network contains a third billing system.

9. A computer-implemented method for providing a telephone service with a switch box, the method comprising:
registering a switch box with an IP-PBX server via an IP network;
receiving, by the switch box, from the IP-PBX server, a first telephone number for use on a Public Switched Telephone Network from the switch box via the IP network;
dialing, by the IP-PBX server, the first telephone number to place an outbound telephone call using a second telephone number as a caller number via the Public Switched Telephone Network;
receiving, by the switch box, an inbound telephone call from the IP-PBX server via the Public Switch Telephone Network with the second telephone number as a calling party and the second telephone number as a calling party;
receiving, by the IP-PBX server, the inbound telephone call routed from the switch box via the IP network;
confirming that the caller number of the inbound telephone call matches the second telephone number;
hanging up, by the IP-PBX server, the outbound telephone call once the call is established;
ending, by the IP-PBX server, the inbound telephone call; and
validating that the personal switch box is associated with the first telephone number.

10. A computer-implemented method for providing a telephone service with a switch box, comprising steps of:
registering a switch box via an IP network;
receiving a first telephone number for use on a Public Switched Telephone Network from the switch box via the IP network;
receiving an incoming telephone call from the switch box via the Public Switched Telephone Network;
receiving a caller telephone number for the incoming telephone call from the Public Switched Telephone Network;
picking up the incoming telephone call when the caller telephone number is the first telephone number;
receiving identifier data from the caller over the phone call; and
validating that the switch box is associated with the first telephone number when the identifier data is associated with the switch box.

11. A switch box, comprising:
an FXO port for connecting to a phone landline with a telephone number to connect to the Public Telephone Circuit through the local telephone operator,
a data port for connecting to IP-PBX on an MVNO network, and
an association with at least one smartphone on the MVNO network based on an MVNO subscriber identifier managed in conjunction with the IP-PBX,
wherein, a voice call initiated by the smartphone passes through the IP-PBX and the switch box to the phone line with a phone number of the phone line as a caller number.
